# EUROPÄISCHE PATENTANMELDUNG

(11) **EP 1 206 058 A2**
(43) Veröffentlichungstag der Anmeldung: **15.05.2002**
(21) Anmeldenummer: 01124413.4
(22) Anmeldetag: 11.10.2001
(51) Int. Cl.: H04H 1/00

(54) **Empfänger für den Empfang von digitalen Rundfunksignalen, wobei die digitalen Rundfunksignale optisch darstellbare Daten und Audiodaten enthalten und wobei der Empfänger eine Kommunikationsschnittstelle zur Nahbereichsdatenübertragung zu einem tragbaren elektrischen Gerät aufweist**

(30) Priorität: 07.11.2000 DE 10055085
(71) Anmelder: ROBERT BOSCH GMBH, 70442 Stuttgart (DE)
(72) Erfinder: Koch, Hartwig, 31139 Hildesheim (DE); Naberfeld, Frank, 31171 Nordstemmen (DE); Mlasko, Torsten, 31141 Hildesheim (DE)

(57) **Zusammenfassung**

Es wird ein Rundfunkempfänger für digitale Rundfunksignale vorgeschlagen, der eine erste Kommunikationsschnittstelle zur Nahbereichsdatenübertragung mit einem tragbaren elektrischen Gerät aufweist, so dass in digitalen Rundfunksignalen enthaltene optisch darstellbare Daten auf einem Anzeigenfeld des elektrischen Gerätes anzeigbar sind. Neben den optisch darstellbaren Daten sind auch Audiodaten von dem Rundfunkempfänger auf das tragbare elektrische Gerät übertragbar.

## Beschreibung

### Stand der Technik

Die Erfindung geht aus von einem Rundfunkempfänger für digitale Rundfunksignale nach der Gattung des unabhängigen Patentanspruchs.

Es sind bereits Rundfunkempfänger für digitale Rundfunksignale wie DAB (Digital Audio Broadcasting)-Empfänger bekannt, wobei in den DAB-Signalen auch Multimediadaten, beispielsweise mittels des MOT (Multimedia Object Transfer)-Protokolls übertragbar sind.

### Vorteile der Erfindung

Der erfindungsgemäße Rundfunkempfänger für digitale Rundfunksignale mit den Merkmalen des unabhängigen Patentanspruchs hat demgegenüber den Vorteil, dass zur Anzeige von optisch darstellbaren Daten, die in den digitalen Rundfunksignalen enthalten sind, die Anzeige eines tragbaren elektrischen Gerätes, beispielsweise eines persönlichen digitalen Assistenten (PDA) oder eines Mobiltelefons oder eines Notebooks verwendet wird. Dies führt zu einer besseren Benutzerführung und einer effizienteren Nutzung von Datendiensten, da ein größeres und komfortableres Display als Anzeige durch den PDA oder den Laptop oder auch ein Mobiltelefon möglich ist. Dies ist insbesondere dann von Vorteil, wenn der DAB-Empfänger selbst kein oder nur ein sehr eingeschränktes Display aufweist. Da solche tragbaren elektrischen Geräte eine immer größere Bedeutung gewinnen und immer mehr Personen ein solches Gerät mit sich tragen werden, werden so die Anwendungsmöglichkeiten dieses elektrischen Gerätes weiter erhöht. Weiterhin ist der erfindungsgemäße Rundfunkempfänger auch für andere digitale Rundfunkübertragungsverfahren einsetzbar. Dazu gehören DRM (Digital Radio Mondiale), RDS (Radio Data System), DVB (Digital Video Broadcasting) und satellitengestützte Rundfunkübertragungsverfahren wie Sirius.

Durch die in den abhängigen Ansprüchen aufgeführten Maßnahmen und Weiterbildungen sind vorteilhafte Verbesserungen des im unabhängigen Patentanspruch angegebenen Rundfunkempfängers für digitale Rundfunksignale möglich.

Besonders vorteilhaft ist, dass das tragbare elektrische Gerät die optisch darstellbaren Daten selbst dekodiert und so das Empfangsteil des Rundfunkempfängers von dieser Dekodierung entlastet. Damit wird vorhandene Rechnerkapazität besser ausgenutzt und der Rundfunkempfänger kann im Bezug auf das Empfangsteil einfacher und damit günstiger gestaltet sein.

Darüber hinaus ist es von Vorteil, dass der Rundfunkempfänger gleichzeitig Daten und Audiodaten empfangen kann, so dass neben der Nutzung der Datendienste auch eine Wiedergabe von Audioprogrammen möglich ist. Bei DAB ist dies der Empfang eines kompletten Ensembles, so dass neben den Datendiensten auch Audioservices genutzt werden können.

Weiterhin ist es von Vorteil, dass der Rundfunkempfänger neben dem Empfangsteil auch ein Bedienteil, eine sogenannte Head-Unit aufweist, wobei das Bedienteil die Kommunikationsschnittstelle zur Nahbereichsdatenübertragung mit dem tragbaren elektrischen Gerät aufweist. Die Verbindung zwischen Bedienteil und Empfangsteil kann als Bus, beispielsweise als MOST-Bus ausgestaltet sein. Daher ist es nicht erforderlich, dass eine direkte Verbindung zwischen dem eigentlichen Empfangsteil und dem tragbaren elektrischen Gerät besteht. Das Empfangsteil kann beispielsweise im DAB-Fall eine DAB-Empfängerbox sein, die Daten an das Bedienteil liefert.

Darüber hinaus ist es von Vorteil, dass neben optisch darstellbaren Daten auch Audiodaten von dem Rundfunkempfänger zu dem tragbaren elektrischen Gerät im Nahbereich übertragbar sind, so dass mittels des tragbaren elektrischen Geräts gewisse Audiodaten abspeicherbar sind und dann bei Bedarf abspielbar.

Desweiteren ist es von Vorteil, dass an dem tragbaren elektrischen Gerät Bedienelemente zur Eingabe von Eingabebefehlen für den Rundfunkempfänger vorliegen, so dass eine Art Fernbedienung zusätzlich erreicht wird. Auch das tragbare elektrische Gerät weist eine Kommunikationsschnittstelle auf, um die Daten zur Kommunikationsschnittstelle des Rundfunkempfängers zu übertragen bzw. von der Kommunikationsschnittstelle des Rundfunkempfängers zu empfangen. Weiterhin weist das tragbare elektrische Gerät einen Prozessor zur Dekodierung der optisch darstellbaren Daten auf.

### Zeichnung

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Rundfunkempfängers und die Verbindung zum tragbaren elektrischen Gerät, Figur 2 eine Vorderansicht des tragbaren elektrischen Geräts und Figur 3 ein Blockschaltbild des tragbaren elektrischen Geräts.

### Beschreibung

Die zunehmende Verbreitung von digitalen Rundfunkdiensten wie DAB, DVB und RDS und in Zukunft auch DRM (Digital Radio Mondial) bringen es mit sich, dass neben den reinen Audioprogrammen auch umfangreiche Datendienste übertragbar sind. Dazu gehören beispielsweise Verkehrs- und Touristikinformationen aber auch audioprogrammbegleitende Daten wie Informationen über aktuell gesendete Titel und Inhaltsbeschreibungen. Da diese Daten insbesondere optisch darstellbar sind, ist ein geeignetes, möglichst farbiges Display mit einer entsprechenden Größe bereitzustellen. Da solche Displays jedoch beinahe so aufwendig sind wie ein DAB-Empfänger, ist es notwendig, bereits vorhandene Anzeigesysteme dafür zu nutzen, um die Akzeptanz dieser Datendienste zu steigern.

Immer mehr Personen führen ein tragbares elektrisches Gerät mit einer Anzeige mit sich. Solche tragbaren elektrischen Geräte sind ein PDA oder auch Mobiltelefone, die insbesondere für den neuen UMTS(Universal Mobile Telecommunication System)-Standard ausgelegt sind und auch ein größeres Display in Farbe aufweisen können.

Erfindungsgemäß wird daher ein Rundfunkempfänger mit einer ersten Kommunikationsschnittstelle zur Nahbereichsdatenübertragung mit einem solchen elektrischen Gerät versehen, um das Anzeigenfeld für die Anzeige der optisch darstellbaren Daten, die in den digitalen Rundfunksignalen enthalten sind, zu nutzen. Auch das erfindungsgemäße elektrische Gerät weist daher eine entsprechende Kommunikationsschnittstelle auf, um die Nahbereichsdatenübertragung zu ermöglichen. Dabei kann es sein, dass das tragbare elektrische Gerät die Daten für die Datendienste selbst dekodiert. Alternativ ist es möglich, dass jedoch der Rundfunkempfänger bereits die Dekodierung vornimmt. Über das tragbare elektrische Gerät ist es weiterhin möglich, Eingabebefehle für den Rundfunkempfänger einzugeben und so die Nahbereichsdatenverbindung zwischen dem Rundfunkempfänger und dem tragbaren elektrischen Gerät in beiden Richtungen zu nutzen. Dies kann entweder im Halbduplexbetrieb oder um die Geschwindigkeit zu erhöhen, im Vollduplexbetrieb realisiert sein. Damit wird die Anwendung einer Fernbedienung erreicht.

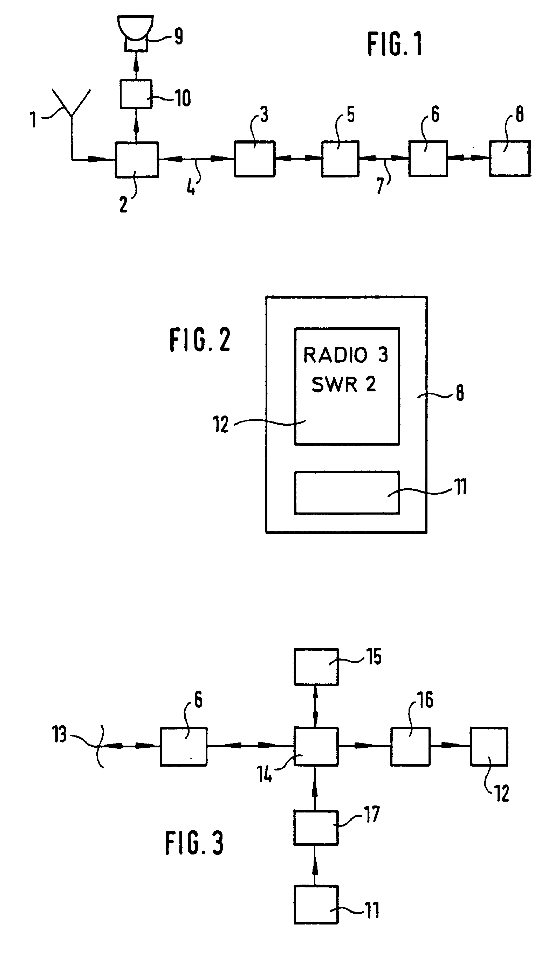

Figur 1 zeigt als Blockschaltbild den erfindungsgemäßen Rundfunkempfänger, der mit dem erfindungsgemäßen tragbaren elektrischen Gerät über eine Nahbereichsdatenverbindung verbunden ist. Eine Antenne 1 zum Empfang der digitalen Rundfunksignale ist an einen Eingang eines DAB-Empfangsteils 2 angeschlossen. Über einen ersten Datenausgang ist das DAB-Empfangsteil 2 mit einem Audioverstärker 10 verbunden, der an einen Eingang eines Lautsprechers 9 angeschlossen ist. Über einen Datenein-/-ausgang ist der DAB-Empfangsteil 2 über einen Bus 4, hier einen MOST-Bus, mit einem Bedienteil 3, das auch als Head-Unit bezeichnet wird, verbunden. Das Bedienteil 3 ist über einen zweiten Datenein-/-ausgang mit einer Kommunikationsschnittstelle 5 verbunden, die in einem Gehäuse mit dem Bedienteil 3 untergebracht ist. Die Kommunikationsschnittstelle 5 ist über einen zweiten Datenein-/-ausgang über eine Übertragungsstrecke 7 mit einer Kommunikationsschnittstelle 6 eines tragbaren elektrischen Geräts, hier eines PDAs, verbunden. Die Kommunikationsschnittstelle 6 ist mit den übrigen Komponenten des PDAs 8 über einen zweiten Datenein-/-ausgang verbunden.

Das DAB-Empfangsteil 2 verstärkt, filtert und setzt die empfangenen digitalen Rundfunksignale um und digitalisiert sie. Weiterhin führt das DAB-Empfangsteil 2 eine Dekodierung der empfangenen Audiodaten in den digitalen Rundfunksignalen durch und formt aus ihnen mittels eines Digital-/Analog-Wandlers wieder analoge Audiosignale, die dann an den Audioverstärker 10 übertragen werden. Der Audioverstärker 10 verstärkt diese analogen Audiosignale, die dann von dem Lautsprecher 9 wiedergegeben werden. Anstatt eines Lautsprechers 9 kann auch ein Lautsprechersystem an den Audioverstärker 10 anschließbar sein.

Die Daten der Datendienste kann der DAB-Empfangsteil 2 entweder undekodiert über den Bus 4 zum Bedienteil 3 übertragen oder er führt bereits eine Dekodierung durch. Werden die Daten undekodiert über den Bus 4 übertragen, dann übernimmt schließlich der PDA 8 die Dekodierung, um den DAB-Empfangsteil 2 von dieser Arbeit zu entlasten. Das Bedienteil 3, das in einem Gehäuse mit der Kommunikationsschnittstelle 5 untergebracht ist, gibt diese Daten einfach an die Kommunikationsschnittstelle 5 weiter, die hier ein Infrarot-Sende-/Empfangssystem ist. Das Infrarot-Sende-/Empfangssystem besteht aus einer Infrarotdiode zum Senden und einer Infrarotfotodiode zum Empfang von Infrarotsignalen. Darüber hinaus weist die Kommunikationsschnittstelle 5 Verstärker auf, um zu sendende Signale zu verstärken und empfangene Signale ebenfalls nachzuverstärken. Alternativ ist es möglich, dass anstatt Infrarot auch Funksignale verwendbar sind, wobei dann die Kommunikationsschnittstelle 5 als Funkschnittstelle ausgebildet ist. Hier bietet sich vor allem der Standard Bluetooth an, der für die Nahbereichskommunikation definiert ist. Eine weitere Alternative besteht darin, dass die Kommunikationsschnittstelle 5 in einem Steckplatz als Kontakt untergebracht ist, in den der PDA einführbar ist, um dann über einen physischen Kontakt von elektrischen Metallkontakten die Übertragungsstrecke 7 zu realisieren. Die Kommunikationsschnittstelle 6 des PDA 8 ist ebenfalls so ausgebildet wie die Kommunikationsschnittstelle 5, so dass eine Übertragung über die Übertragungsstrecke 7 möglich ist. Unter Nahbereichskommunikation wird hier eine Datenübertragung bei einer Länge der Übertragungsstrecke von wenigen Metern verstanden.

In Figur 2 ist eine Ansicht des PDA 8 dargestellt. Der PDA 8 weist ein Anzeigenfeld 12 auf. Hier sind die Radiosendernamen Radio 3 und SWR 2 dargestellt und ein Bedienfeld 11, um Daten auszuwählen und verfügbare Funktionen an diesen Daten anzuwenden. Zu solchen Funktionen gehört beispielsweise der Abruf von Multimediainformationen. Darüber hinaus ist es möglich, dass über entsprechende Funktionen, die auf dem Anzeigenfeld 12 angezeigt werden, der Rundfunkempfänger in seiner Funktionalität bedienbar ist. Dazu zählen die Auswahl von Programmen, die Einstellung der Lautstärke, die Einstellung unterschiedlicher Lautsprecher und Equalizer-Funktionen. Das Bedienfeld 11 ist hier als Tastatur ausgebildet, es ist jedoch auch möglich, dass auf dem Anzeigenfeld 12 Touch-Screen-Möglichkeiten vorhanden sind, wobei das Anzeigenfeld 12 hier als Plasmabildschirm oder als Flüssigkristallbildschirm ausgeführt ist.

In Figur 3 ist als Blockschaltbild das erfindungsgemäße tragbare elektrische Gerät dargestellt. Die Daten, die über die Übertragungsstrecke 7 übertragen werden, werden hier über den Ein-/Ausgang 13 empfangen bzw. gesendet. An den Ein-/Ausgang 13 ist die Kommunikationsschnittstelle 6 angeschlossen, die über ihren zweiten Datenein-/-ausgang mit einem Prozessor 14 des tragbaren elektrischen Geräts, hier des PDAs, verbunden ist. Der Prozessor 14 führt gegebenenfalls die Dekodierung der Daten für die digitalen Datendienste durch. Der Prozessor 14 ist über einen zweiten Datenein-/-ausgang mit einem Speicher 15 zur Zwischenspeicherung verbunden. Über einen Datenausgang ist der Prozessor 14 mit einer Signalverarbeitung 16 verbunden, die an das Anzeigenfeld 12 angeschlossen ist. Über einen Dateneingang ist der Prozessor 14 mit einer Signalverarbeitung 17 verbunden, an die das Bedienfeld 11 angeschlossen ist.

Der Prozessor 14 dekodiert, wie oben dargestellt, gegebenenfalls Rohdaten, die über die Kommunikationsschnittstelle 6 empfangen wurden. Diese Daten werden dann zur Darstellung an die Signalverarbeitung 16 weitergegeben, die das Anzeigenfeld 12 ansteuert. Dann werden, wie in Figur 2 dargestellt, die entsprechenden Daten auf dem Anzeigenfeld 12 angezeigt. Über das Bedienfeld 11 werden Eingaben gemacht, die dann in elektrische Signale umgewandelt werden und von der Signalverarbeitung 17 verstärkt und digitalisiert werden und an den Prozessor 14 übertragen werden, so dass der Prozessor 14 entweder direkt auf diese Eingaben durch Darstellung oder Ausführungen von Funktionen reagiert oder, wenn diese Eingaben den Rundfunkempfänger betreffen, die Eingabesignale als Datum über die Kommunikationsschnittstelle 6 und den Datenein-/ausgang 13 zu dem Rundfunkempfänger überträgt.

Darüber hinaus ist es möglich, dass neben den optisch darstellbaren Daten auch Audiodaten auf den PDA überspielbar über die Übertragungsstrecke 7 sind, wobei dann der PDA auch Mittel zur Wiedergabe von Audiodaten aufweist, also einen Audioprozessor, einen Audioverstärker und einen Lautsprecher. Damit ist es dann vorteilhafterweise möglich, Audiodaten, die mit dem Rundfunkempfänger empfangen werden, abspeicherbar sind und dann mit dem PDA auf weitere Geräte überspielbar sind. Zu solchen Audiodaten gehören insbesondere die MP3-codierten Dateien.

Der Rundfunkempfänger kann entweder in einem Kraftfahrzeug oder im Heimbetrieb eingesetzt werden.

## Patentansprüche

1. Rundfunkempfänger für digitale Rundfunksignale, wobei die digitalen Rundfunksignale optisch darstellbare Daten und Audiodaten aufweisen, **dadurch gekennzeichnet, dass** der Rundfunkempfänger eine Kommunikationsschnittstelle (5) zur Nahbereichsdatenübertragung mit einem tragbaren elektrischen Gerät (8) aufweist, das ein Anzeigenfeld (12) für die Anzeige der optisch darstellbaren Daten aufweist.

2. Rundfunkempfänger nach Anspruch 1, **dadurch gekennzeichnet, dass** über die erste Kommunikationsschnittstelle (5) unkodierte optisch darstellbare Daten an das tragbare elektrische Gerät übertragbar sind.

3. Rundfunkempfänger nach Anspruch 1 oder 2, **dadurch gekennzeichnet, dass** für den Rundfunkempfänger gleichzeitig die optisch darstellbaren Daten und die Audiodaten mit den digitalen Rundfunksignalen empfangbar sind.

4. Rundfunkempfänger nach einem der vorhergehenden Ansprüche, **dadurch gekennzeichnet, dass** der Rundfunkempfänger ein Empfangsteil (2) und ein Bedienteil (3) aufweist, wobei das Bedienteil (3) die erste Kommunikationsschnittstelle (5) aufweist.

5. Rundfunkempfänger nach Anspruch 4, **dadurch gekennzeichnet, dass** das Empfangsteil (2) und das Bedienteil (3) über einen Bus (4) verbindbar sind.

6. Rundfunkempfänger nach einem der vorhergehenden Ansprüche, **dadurch gekennzeichnet, dass** die Audiodaten von dem Rundfunkempfänger über die erste Kommunikationsschnittstelle zu dem tragbaren elektrischen Gerät (8) übertragbar sind.

7. Rundfunkempfänger nach einem der vorhergehenden Ansprüche, **dadurch gekennzeichnet, dass** von dem tragbaren elektrischen Gerät (8) Eingabebefehle für den Rundfunkempfänger zu dem Rundfunkempfänger über die erste Kommunikationsschnittstelle (5) übertragbar sind.

8. Tragbares elektrisches Gerät nach einem der vorhergehenden Ansprüche, **dadurch gekennzeichnet, dass** das tragbare elektrische Gerät eine zweite Kommunikationsschnittstelle (6) zur Nahbereichsdatenübertragung mit dem Rundfunkempfänger Bedienelemente (11) zur Eingabe von Eingabebefehlen für den Rundfunkempfänger und Mittel zur Dekodierung der optisch darstellbaren Daten aufweist.
